# FASCICULE DE BREVET EUROPEEN

(11) **EP 3 149 902 B1**
(45) Date de publication et mention de la délivrance du brevet: **04.07.2018**
(21) Numéro de dépôt: 15732798.2
(22) Date de dépôt: 26.05.2015
(51) Int. Cl.: H04L 29/06, H04L 12/24, H04L 12/725

(54) **TECHNIQUE D'OBTENTION D'UNE POLITIQUE DE ROUTAGE DE REQUÊTES ÉMISES PAR UN MODULE LOGICIEL S'EXÉCUTANT SUR UN DISPOSITIF CLIENT**
VERFAHREN ZUR ERZEUGUNG EINER RICHTLINIE FÜR ROUTING-ANFRAGEN, DIE VON EINEM AUF EINER CLIENT-VORRICHTUNG LAUFENDEN SOFTWARE-MODUL AUSGESENDET WERDEN
TECHNIQUE FOR OBTAINING A POLICY FOR ROUTING REQUESTS EMITTED BY A SOFTWARE MODULE RUNNING ON A CLIENT DEVICE

(30) Priorité: 28.05.2014 FR 1454875
(43) Date de publication de la demande: 05.04.2017
(73) Titulaire: Orange, 75015 Paris (FR)
(72) Inventeur: OMNES, Nathalie, F-22560 Trébeurden (FR); STEPHAN, Emile, F-22560 Pleumeur Bodou (FR); CORBEL, Romuald, 22300 Ploubezre (FR)
(86) Numéro de dépôt international: PCT/FR2015/051378
(87) Numéro de publication internationale: WO 2015/181484

(56) Documents cités:
- EP-A1- 2 475 142
- WO-A2-2011/087223

## Description

L'invention se situe dans le domaine des réseaux de communication par paquets et concerne plus particulièrement une technique d'obtention d'une politique de routage de requêtes émises par un module logiciel s'exécutant sur un dispositif client.

Il est fréquent pour un opérateur d'un réseau de communication d'utiliser dans son réseau des serveurs mandataires ou « proxy » en anglais, afin de proposer à ses abonnés des services à valeur ajoutée fournis par l'opérateur lui-même ou par un partenaire de l'opérateur. Ces serveurs mandataires permettent d'analyser et d'enrichir une requête relative à un service émise par une module logiciel dit « user-agent » (e.g. un navigateur) installée sur un dispositif client, ou encore depuis un équipement permettant de se connecter à l'Internet. L'analyse de la requête est par exemple réalisée à l'aide d'une technique dite d'Inspection des Paquets en Profondeur (ou DPI en anglais pour « *Deep Packet Inspection* ») et son enrichissement par l'ajout d'un ou plusieurs paramètres HTTP pour « *HyperText Transfer Protocol* ». Grâce à cette requête enrichie, un fournisseur de services peut par exemple fournir des fonctions telles qu'un contrôle parental, des services géolocalisés, ou encore une personnalisation du service délivré en fonction d'un type d'abonnement de l'abonné. Les serveurs mandataires permettent en particulier de différencier le trafic à destination de l'opérateur, d'un partenaire de l'opérateur, ou encore d'un réseau tiers.

La prochaine version du protocole HTTP, le « HTTP 2.0 », actuellement en cours de discussion au sein du groupe de travail « Hypertext Transfer Protocol Bis » (ou httpbis) de l'IETF pour « *Internet Engineering Task Force* », met en oeuvre des fonctions qui complexifient l'analyse et l'enrichissement des requêtes relatives à un service émises depuis par exemple un navigateur. Le protocole HTTP 2.0 permet en particulier un multiplexage des échanges, un entrelacement de ces échanges, une compression des entêtes qui leurs sont relatifs, et également de les sécuriser à l'aide du protocole TLS pour « Transport Layer Security ». Ces nouvelles fonctions nécessitent un traitement adapté par l'opérateur de réseau afin d'assurer une continuité des services à valeurs ajoutés proposés à ses abonnés. Pour cela l'opérateur de réseau associe un équipement mandataire à un ou plusieurs services, proposés par l'opérateur lui-même ou un fournisseur de services, vers lesquels router les requêtes relatives à l'un de ces services. Cette association n'est cependant pas toujours respectée. Le routage de ces requêtes vers l'équipement mandataire associé à un service peut en effet ne pas être pris en compte, les requêtes pour ce service pouvant être redirigées par un navigateur vers un autre équipement mandataire. Cela peut en particulier occasionner un routage vers un équipement mandataire inadapté au traitement du service requis. L'absence d'analyse et/ou d'enrichissement de la requête relative au service requis par un équipement mandataire en charge du contrôle des requêtes pour le service, peut notamment se traduire par des problèmes de facturation liée au service (e.g. facturation d'un service gratuit), une dégradation du service requis ou souscrit par un abonné, ou encore une impossibilité pour l'opérateur ou le fournisseur de services de le délivrer.

Le document « draft-loreto-httpis-explicitly-auth-proxy-OO.txt » de l'IETF propose une méthode permettant à un module logiciel de découvrir automatiquement un équipement mandataire explicitement authentifié. La méthode proposée permet en outre à un utilisateur du module logiciel de donner explicitement son accord quant à un acheminement, par l'intermédiaire de l'équipement mandataire explicitement authentifié, des requêtes HTTP émises depuis ce module logiciel. Plus précisément, l'équipement mandataire indique sa présence au module logiciel lors de la négociation des paramètres relatifs à une connexion TLS. L'équipement mandataire intercepte un message TLS « ClientHello », et répond à ce message par un message TLS « ServerHello » comprenant un certificat de l'équipement mandataire. Le module logiciel vérifie si le certificat appartient à un équipement mandataire à l'aide d'un champ particulier du certificat, puis s'assure ensuite du consentement de l'utilisateur quant au routage des requêtes HTTP émises par le module logiciel vers cet équipement mandataire. Il est souligné que la solution proposée dans ce document requiert un type particulier de certificat afin d'authentifier l'équipement mandataire. Cette solution nécessite en outre pour l'équipement mandataire d'intercepter un message TLS spécifique et de modifier la réponse à ce message. Le document évoque également la possibilité pour un dispositif client de découvrir la présence d'un équipement mandataire avant l'établissement d'une connexion TLS, lors de l'attachement du dispositif client au réseau, sans toutefois donner d'indications quant aux modalités permettant cette découverte de l'équipement mandataire.

Le document EP 2 475 142 A1 (ZTE Corp - 11 juillet 2012) décrit une méthode pour acquérir une stratégie de routage. Ce document permet de transmettre des stratégies de routage à des équipements radio pour des accès IP locaux.

Un des buts de l'invention est de remédier à des insuffisances/inconvénients de l'état de la technique et/ou d'y apporter des améliorations.

Selon un premier aspect l'invention concerne un procédé d'obtention, dans un réseau de communications, d'une politique de routage indiquant des règles de routage de requêtes émises par un module logiciel s'exécutant sur un dispositif client. Le procédé comprend les étapes suivantes, mises en oeuvre lors d'un attachement du dispositif client au réseau de communications :
- envoi, par le dispositif client, à un serveur d'authentification du réseau de communications, d'une demande de contexte de connexion afin d'attacher le dispositif client au réseau de communications ;
- réception, par le dispositif client, depuis le serveur d'authentification, d'une réponse de contexte de connexion, le contexte comprenant un identifiant d'un équipement de gestion de règles de routage ;
- obtention, par le module logiciel, de la politique de routage, à partir au moins d'une première règle de routage vers un équipement mandataire certifié par l'opérateur du réseau de communications obtenue au moyen de l'identifiant.

La mise en oeuvre du procédé lors de l'attachement au réseau de communications du dispositif client permet de garantir que les requêtes émises par le module logiciel ne sont pas envoyées ou détournées vers un équipement mandataire non approuvé par l'opérateur du réseau de communications. L'identifiant de l'équipement de gestion de règles de routage étant fourni par le réseau de communications avant même qu'un contexte de connexion ne soit activé entre le dispositif client et le réseau de communications, et donc qu'une adresse n'ait été attribuée au dispositif client dans le réseau de communications, aucun tiers ne peut en effet intervenir avant la fin de la procédure d'attachement. Le procédé permet ainsi de sécuriser l'obtention de la politique de routage et de garantir que cette dernière provient d'une source fiable. En outre, le procédé permet de prémunir un fournisseur de services d'un problème de sécurité lié à un routage d'une requête vers un équipement du réseau susceptible de malveillance sur le contenu de la requête ou envers le fournisseur de services. Il permet en particulier d'assurer un parcours sécurisé des requêtes émises par le module logiciel.

Un détournement des requêtes émises par le module logiciel étant évité, il est en outre possible pour l'opérateur du réseau de communications d'assurer la continuité des services à valeur ajoutée proposés pour ces requêtes.

Le procédé permet en outre d'éviter à un abonné de l'opérateur du réseau de communications une expérience utilisateur dégradée due à un routage inapproprié des requêtes émises par le module logiciel.

Par ailleurs l'envoi d'un identifiant de l'équipement de gestion de règles de routage avec le contexte de connexion permet de limiter les échanges réseaux nécessaires à la découverte de cet équipement par le module logiciel. En particulier, aucun message IP (pour *Internet Protocol*) spécifique n'est nécessaire pour l'obtention de cet identifiant. L'identifiant de l'équipement de gestion de règles de routage étant fourni par le serveur d'authentification à l'attachement du dispositif client au réseau de communications, aucune interception des messages émis par le module logiciel n'est nécessaire pour que l'équipement de gestion puisse manifester sa présence auprès du dispositif client. L'identifiant est notamment fourni dans le contexte de connexion en tant que paramètre. Le déploiement de l'invention dans le réseau de communications est ainsi facilité.

Selon une caractéristique particulière, le procédé d'obtention comprend en outre les étapes suivantes mises en oeuvre par le module logiciel, préalablement à l'obtention de la politique de routage :
- établissement d'une connexion sécurisée avec l'équipement de gestion de règles de routage ;
- réception, par l'intermédiaire de la connexion sécurisée, d'au moins un certificat associé à l'équipement de gestion de règles de routage.
La première règle de routage est par ailleurs déterminée à partir d'au moins un identifiant de ressource compris dans le certificat reçu.

Le procédé permet de certifier les ressources destinataires des requêtes émises par le module logiciel et l'équipement de gestion de règles de routage avec un même certificat. L'obtention de l'identifiant de l'équipement de gestion de règles de routage ne requiert notamment pas d'établissement préalable d'une connexion sécurisée (e.g. connexion de type TLS) avec ces ressources, afin de les authentifier. L'obtention d'une politique de routage minimale à partir de la première règle de routage peut ainsi être obtenue rapidement. De même l'obtention rapide de la politique de routage permet une diminution des temps de réponses aux requêtes émises par le module logiciel, et une augmentation de la qualité de service relative aux traitements de ces requêtes.

En outre le certificat définit des identifiants de ressources auxquelles la première règle de routage s'applique. Ces ressources sont par exemple des équipements physiques du réseau de communications ou des services (e.g. service de distribution de contenus, service d'impression, service web) fournis par ces équipements. Il permet ainsi de définir une politique de routage minimale en fonction des identifiants de ressources pour lesquelles des requêtes sont émises par le module logiciel. Cette politique de routage minimale consiste avantageusement à router l'ensemble des requêtes relatives à une ressource définie dans le certificat vers l'équipement de gestion de règles de routage. Cet équipement de gestion est par exemple géré par l'opérateur du réseau de communications. La politique de routage obtenue à partir de la première règle de routage permet ainsi de router des requêtes relatives à des services fournis par des fournisseurs de services partenaires de l'opérateur du réseau de communications vers l'équipement de gestion de règles de routage. L'équipement de gestion de règles de routage peut ainsi mettre en oeuvre des fonctions à valeur ajoutée sur les requêtes à destination des fournisseurs de services pour lesquels il existe par exemple un accord d'enrichissement de ces requêtes avec l'opérateur du réseau de communications.

Une politique de routage définie à partir des identifiants de ressources compris dans le certificat reçu par le module logiciel, permet également de limiter la portée de la première règle de routage aux seules ressources déclarées dans le certificat.

Le routage des requêtes en fonction des ressources déclarées par l'intermédiaire du certificat évite notamment à un fournisseur de services de recevoir des requêtes qui ne relèvent pas de sa compétence ou d'une ressource pour laquelle il agit par délégation.

Selon une caractéristique particulière, le procédé d'obtention comprend l'obtention d'une deuxième règle de routage vers un équipement mandataire tiers. La politique de routage est alors obtenue en combinant les première et deuxième règles de routage.

La deuxième règle de routage est par exemple obtenue auprès de l'équipement de gestion de règles de routage. Elle permet de compléter la première règle de routage. Cette deuxième règle de routage est avantageusement obtenue auprès d'un équipement mandataire tiers d'un fournisseur de services partenaire de l'opérateur du réseau de communications. La politique de routage résultant de la combinaison des première et deuxième règles de routage permet notamment au dispositif client de s'interconnecter à plusieurs équipements mandataires. Ces équipements mandataires appartiennent par exemple aux différents fournisseurs de services partenaires de l'opérateur du réseau de communications. Plus généralement la politique de routage permet de router des requêtes relatives à une ressource ou à un service vers un équipement mandataire adapté à leur traitement.

Le procédé permet ainsi à des fournisseurs de services de faire coexister leurs règles de routage respectives dans une même politique de routage. Il est rappelé que selon les techniques connues de l'état de l'art, un module logiciel s'exécutant sur un dispositif client ne peut recevoir qu'une politique de routage à la fois. Grace au procédé plusieurs règles de routage issues de différents fournisseurs de services peuvent ainsi être combinées ensemble pour former une politique de routage qui prenne en compte des contraintes de routage propres à chacun de ces fournisseurs.

L'obtention de la politique de routage par combinaison des règles de routage gérées par des équipements mandataires tiers de différents fournisseurs de services présente en outre l'avantage pour le module logiciel de n'avoir qu'une unique politique de routage consolidée à traiter. La combinaison des règles en une unique politique de routage permet également de présenter au module logiciel un ensemble de règles cohérentes et optimisées et d'éviter une redondance de règles. Le traitement des règles de routage par le module logiciel est ainsi accéléré.

Selon une caractéristique particulière, l'obtention de la deuxième règle de routage et la combinaison des première et deuxième règles de routage sont mises en oeuvre par le module logiciel s'exécutant sur le dispositif client.

L'obtention et la combinaison des règles de routage par le module logiciel permettent de gérer la cohabitation de règles de routage directement au niveau du dispositif client, sans qu'un équipement du réseau de communications et un équipement mandataire tiers n'aient besoin de s'interconnecter entre eux. Il n'est ainsi pas nécessaire d'affecter des ressources du réseau de communications pour l'agrégation des règles de routage.

Selon une caractéristique particulière, le procédé d'obtention comprend en outre lorsque les première et deuxième règles de routage sont en conflit, une étape d'envoi à l'équipement de gestion de règles de routage, d'une information relative au conflit.

L'envoi par le dispositif client d'une information relative au conflit à l'équipement de gestion de règles de routage permet d'informer ce dernier de la solution retenue le cas échéant par le dispositif client pour résoudre le conflit. Lorsque le conflit ne peut être résolu par le dispositif client, l'information relative au conflit transmise à l'équipement de gestion de règles de routage permet à ce dernier de construire une nouvelle politique de routage afin de tenter de résoudre le conflit.

Selon une caractéristique particulière, l'obtention de la deuxième règle de routage et la combinaison des première et deuxième règles de routage sont mises en oeuvre par l'équipement de gestion de règles de routage.

L'obtention et la combinaison des règles de routage par l'équipement de gestion de règles de routage permettent de décharger le module logiciel de la charge de calcul nécessaire à la consolidation des règles de routage. Ceci est particulièrement avantageux lorsque les ressources de calculs du dispositif client sur lequel s'exécute le module logiciel sont limitées.

En outre, une gestion centralisée des règles de routage par l'équipement de gestion de règles de routage facilite la maintenance et la mise à jour de ces règles. Une telle gestion centralisée permet également de conférer à l'équipement de gestion de règles de routage des fonctions d'accréditation, pour le compte de fournisseurs de services, de la politique de routage obtenue à partir des règles de routage mises en oeuvre par des équipements mandataires gérés par ces fournisseurs.

Selon un deuxième aspect, l'invention concerne un procédé, dans un réseau de communications, d'aide à l'obtention d'une politique de routage indiquant des règles de routage de requêtes émises par un module logiciel s'exécutant sur un dispositif client, le procédé comprenant les étapes suivantes, mises en oeuvre lors d'un attachement du dispositif client au réseau de communications :
- réception, par un serveur d'authentification, depuis le dispositif client, d'une demande de contexte de connexion afin d'attacher le dispositif client au réseau de communications ;
- envoi, par un serveur d'authentification, au dispositif client, d'une réponse de contexte de connexion, le contexte comprenant un identifiant d'un équipement de gestion de règles de routage.

Les avantages énoncés pour le procédé d'obtention d'une politique de routage selon le premier aspect s'appliquent également au procédé d'aide à l'obtention d'une politique de routage selon le deuxième aspect.

Selon un troisième aspect, l'invention concerne également un dispositif client agencé pour obtenir un identifiant d'un équipement de gestion de règles de routage, le dispositif client comprenant :
- un module d'envoi agencé pour envoyer à un serveur d'authentification une demande de contexte de connexion afin d'attacher le dispositif client à un réseau de communications;
- un module de réception d'une réponse de contexte de connexion, le contexte comprenant un identifiant d'un équipement de gestion de règles de routage ;
- un module de traitement agencé pour obtenir une politique de routage destinée à être utilisée par le dispositif client, au moyen de l'identifiant de l'équipement.

Selon un quatrième aspect, l'invention propose un serveur d'authentification, dans un réseau de communications, agencé pour aider un dispositif client à obtenir une politique de routage, comprenant :
- un module de réception agencé pour recevoir une demande de contexte de connexion afin d'attacher le dispositif client au réseau de communications ;
- un module d'envoi agencé pour envoyer une réponse de contexte de connexion, le contexte comprenant un identifiant d'un équipement de gestion de règles de routage ;
- un module de traitement configuré pour insérer l'identifiant de l'équipement dans une réponse de contexte de connexion destinée à un dispositif client, suite à la réception d'une demande de contexte de connexion de ce dispositif client.

Selon un cinquième aspect, l'invention concerne un système d'obtention d'une politique de routage indiquant des règles de routage de requêtes émises par un module logiciel s'exécutant sur un dispositif client, agencé pour fournir la politique de routage au module logiciel. Le système comprend :
- le dispositif client selon le troisième aspect ;
- un serveur d'authentification selon le quatrième aspect.

Selon une caractéristique particulière, le système comprend en outre un équipement de gestion de règles de routage agencé pour gérer des règles de routage, comprenant :
- un module de réception agencé pour recevoir une demande de politique de routage de requêtes émises par un module logiciel s'exécutant sur un dispositif client ;
- un module d'envoi agencé pour envoyer la politique de routage ;
- un module de traitement agencé pour générer une politique de routage destinée à être utilisée par un dispositif client.

Les avantages énoncés pour l'une quelconque des caractéristiques du procédé d'obtention selon le premier aspect sont directement transposables au système selon le cinquième aspect.

Selon un sixième aspect, l'invention concerne également un module logiciel pour un dispositif client, comprenant des instructions de code de programme destinées à commander l'exécution des étapes du procédé d'obtention d'une politique de routage précédemment décrit, lorsque ledit module logiciel est exécuté par ledit dispositif client, et un support d'enregistrement lisible par un dispositif client sur lequel est enregistré un module logiciel pour un dispositif client.

Selon un septième aspect, l'invention concerne également un programme pour un serveur d'authentification, comprenant des instructions de code de programme destinées à commander l'exécution des étapes du procédé d'aide à l'obtention d'une politique de routage précédemment décrit, lorsque ledit programme est exécuté par ledit serveur d'authentification, et un support d'enregistrement lisible par un serveur d'authentification sur lequel est enregistré un programme pour un serveur.

L'invention sera mieux comprise à l'aide de la description suivante de modes de réalisation particuliers, en référence aux dessins annexés sur lesquels :
- les figures 1a et 1b représentent un système d'obtention d'une politique de routage selon deux modes particuliers de réalisation ;
- la figure 2a représente les étapes du procédé d'obtention d'une politique de routage mis en oeuvre par un dispositif client selon un mode particulier de réalisation ;
- la figure 2b représente les étapes d'un procédé d'aide à l'obtention d'une politique de routage mis en oeuvre par un serveur d'authentification selon un mode particulier de réalisation ;
- la figure 2c représente les étapes du procédé d'obtention d'une politique de routage mis en oeuvre par un module logiciel s'exécutant sur un dispositif client selon un mode particulier de réalisation ;
- la figure 3a et 3b représentent des échanges entre équipements mettant en oeuvre les procédés d'obtention et d'aide à l'obtention d'une politique de routage, équipements du réseau de communications et équipements mandataires tiers selon deux modes particuliers de réalisation ;
- la figure 4 représente un dispositif client agencé pour mettre en oeuvre des étapes du procédé d'obtention d'une politique de routage selon un mode particulier de réalisation ;
- la figure 5 représente un serveur d'authentification agencé pour aider un dispositif client à obtenir une politique de routage selon un mode particulier de réalisation ;
- la figure 6 représente un équipement de gestion de règles de routage selon un mode particulier de réalisation.

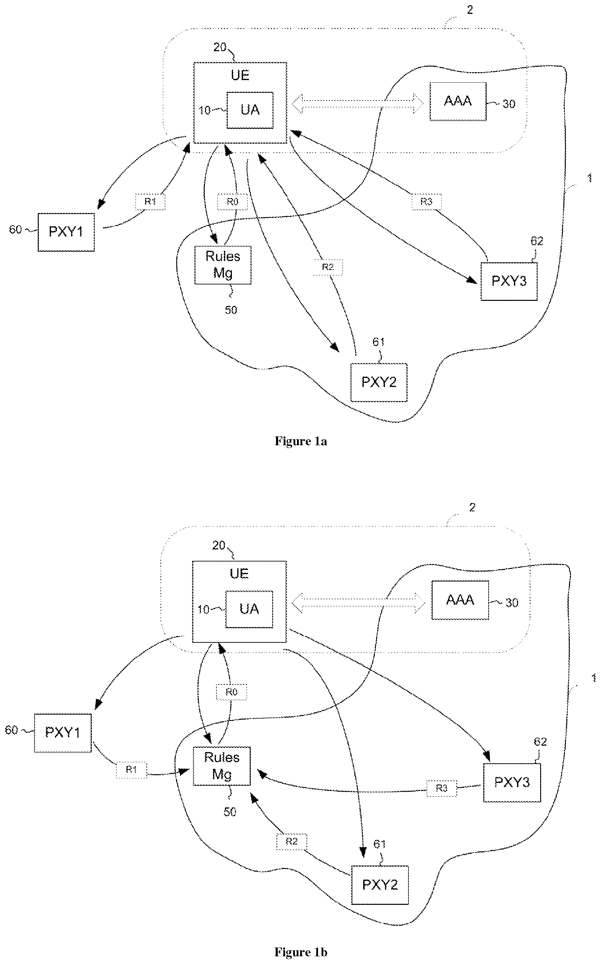

Les **figures 1a et 1b** représentent un système 2 d'obtention, dans un réseau de communications 1, d'une politique de routage de requêtes émises par un module logiciel 10 s'exécutant sur un dispositif client 20 selon deux modes de réalisation particuliers. Le réseau de communications est à titre d'exemple un réseau GPRS (pour *General Packet Radio Service*). Le système 2 comprend le dispositif client 20 sur lequel s'exécute le module logiciel 10 et un serveur d'authentification 30. Le dispositif client 20 est par exemple un terminal utilisateur (e.g. un téléphone mobile, un ordinateur portable, une tablette). Le module logiciel 10 est par exemple une application logicielle ou un composant d'une application logicielle exécutée par le système d'exploitation du dispositif client 20. Il peut notamment s'agir de toute application permettant de communiquer avec un réseau de communication par paquets telle qu'un navigateur, une application de messagerie ou un logiciel émettant des requêtes de type HTTP. Le serveur d'authentification 30 permet au dispositif client 20 de s'authentifier et de s'attacher au réseau de communications 1. L'attachement au réseau de communications 1 est plus particulièrement défini par le fait pour le dispositif client 20 d'obtenir une adresse IP (pour *Internet Protocol*) allouée par le serveur d'authentification 30, permettant au dispositif client 20 d'être identifié sur le réseau de communications 1. Le serveur d'authentification 30 est par exemple un équipement GGSN (pour *Gateway GPRS Support Node*) du réseau de communications 1.

Le système 2 communique avec un équipement de gestion de règles de routage 50. Cet équipement 50 est géré (ou éventuellement simplement approuvé) par l'opérateur du réseau de communications 1. Dans les modes de réalisation décrit en relation avec les figures 1a et 1b, l'équipement de gestion de règles de routage 50 est localisé dans le réseau de communications 1. Il n'existe cependant pas de limitation quant à la localisation de l'équipement de gestion de règles de routage 50 qui peut être ainsi aussi localisé en dehors du réseau de communications 1.

Le système 2 permet par l'intermédiaire d'une politique de routage de router les requêtes émises par le module logiciel 10 vers l'équipement de gestion de règles de routage 50 et des équipements mandataires 60, 61, et 62. Il n'existe pas de limitations quant à la localisation des équipements mandataires. L'équipement mandataire 60 est à titre d'exemple localisé en dehors du réseau de communications 1, et les équipements mandataires 61 et 62 à l'intérieur du réseau de communications 1. Il n'existe pas non plus de limitation quant à l'entité responsable de l'administration d'un équipement mandataire. A titre d'exemple, l'équipement mandataire 61 est administré par l'opérateur du réseau de communications 1, et l'équipement mandataire 62 est administré par un fournisseur de services partenaire de l'opérateur du réseau de communications 1. Il est en outre souligné que selon les modes de réalisation particuliers décrit en relation avec les figures 1a et 1b l'équipement de gestion de règles de routage 50 est également un équipement mandataire.

La figure la décrit plus précisément un mode de réalisation particulier dans lequel la politique de routage est obtenue au niveau du dispositif client 20 en combinant des règles de routage R0, R1, R2, et R3 respectivement obtenues par le module logiciel 10 depuis les équipements mandataires 50, 60, 61 et 62.

Dans le mode de réalisation particulier décrit en relation avec la figure 1b, l'équipement de gestion de règles de routage 50 centralise des règles de routage R1, R2 et R3 respectivement obtenues auprès des équipements mandataires 60, 61, et 62. L'équipement de gestion de règles de routage 50 combine ensuite ces règles avec sa propre règle de routage R0, afin de construire la politique de routage qu'il met ensuite à disposition du module logiciel 10.

En outre, dans les modes de réalisation particuliers décrits en relation avec les figures 1a et 1b, le procédé d'obtention est mis en oeuvre dans un réseau de type GPRS, il n'existe cependant aucune limitation quant à l'architecture réseau dans laquelle est mise en oeuvre l'invention. A titre d'exemple, le procédé peut également être mis en oeuvre dans un réseau fixe, un réseau Wifi ou encore un réseau de fibres optiques.

Par ailleurs dans un autre mode de réalisation, le dispositif client 20 ne se limite pas à un terminal utilisateur. Il peut également s'agir d'un équipement donnant un accès au réseau de communications 1 tel qu'une passerelle domestique.

Quatre équipements mandataires sont représentés sur les figures 1a et 1b, il n'existe cependant aucune limitation quant au nombre d'équipements mandataires à partir desquels la politique de routage peut-être obtenue. Une politique de routage est ainsi soit constituée d'une combinaison de plusieurs règles de routage ou bien de la seule règle de routage de l'équipement de gestion de règles de routage 50. Lorsque l'équipement de gestion de règles de routage 50 est géré par le réseau de communications 1, cette règle de routage constitue alors la règle par défaut de l'opérateur du réseau de communications 1.

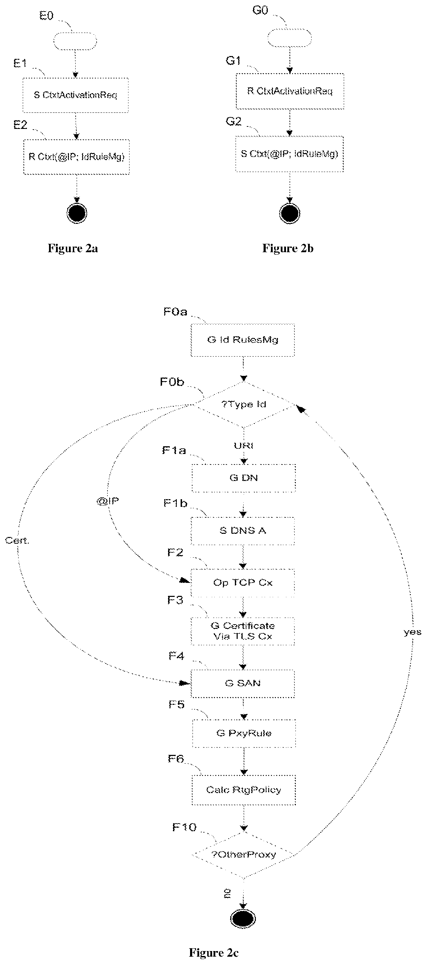

La **figure 2a** représente les étapes du procédé d'obtention d'une politique de routage mis en oeuvre par un dispositif client selon un mode particulier de réalisation.

L'obtention de la politique de routage nécessite au préalable une obtention d'un identifiant de l'équipement de gestion de règles de routage 50 par le dispositif client 20. Les étapes permettant d'obtenir cet identifiant vont maintenant être décrites en relation avec la figure 2a. Ces étapes sont mises en oeuvre par le dispositif client 20.

Dans une étape E0, le dispositif client se trouve dans un état neutre en attente d'un évènement réseau. Cet évènement réseau est par exemple un changement de cellule dans le réseau de communications 1.

Le procédé passe ensuite à une étape E1, d'envoi à un serveur d'authentification du réseau de communications, d'une demande de contexte de connexion afin d'attacher le dispositif client au réseau de communications 1. Le contexte de connexion est à titre d'exemple un contexte PDP (pour *Packet Data Protocol*) et la demande de contexte de connexion correspond par exemple à l'envoi d'un message *PDP Context Activation.*

En réponse à la demande de contexte de connexion, le dispositif client 20 reçoit lors d'une étape E2 une réponse de contexte de connexion comprenant notamment une adresse IP permettant d'identifier le dispositif client 20 dans le réseau de communications 1, ainsi qu'un identifiant d'un équipement de gestion de règles de routage 50 mémorisant une règle de routage gérée par le réseau de communications 1. Cet identifiant est par exemple une adresse IP, un URI d'un fichier de configuration « proxy.pac », ou encore un certificat (e.g. certificat selon la norme X.509) de l'équipement de gestion de règles de routage 50.

Après cette étape E2, les paramètres du contexte de connexion sont à la disposition du module logiciel 10 par l'intermédiaire du système d'exploitation du dispositif client 20 qui les lui fournit sur demande.

Le dispositif client 20 repasse ensuite à l'étape E0, dans l'attente d'un prochain évènement déclenchant une demande de contexte de connexion.

Corrélativement aux étapes d'obtention d'une politique de routage mises en oeuvre par le dispositif client 20, un serveur d'authentification 30 met en oeuvre un procédé d'aide à l'obtention d'une politique de routage. Ce procédé va maintenant être décrit en relation avec la **figure 2b****.**

Dans une étape G0, le serveur d'authentification 30 est en attente d'une demande de contexte de connexion.

Lors d'une étape G1, le serveur d'authentification 30 reçoit une demande de contexte de connexion émise par le dispositif client 20.

A réception de cette demande de contexte de connexion, le serveur d'authentification 30 détermine (étapes non représentées) les paramètres qui seront compris dans le contexte de connexion. Il interroge par exemple un serveur DHCP (pour *Dynamic Host Configuration Protocol*) afin d'obtenir une adresse IP à allouer au dispositif client 20. Le serveur d'authentification 30 détermine également un identifiant de l'équipement de gestion de règles de routage 50 et l'ajoute aux paramètres compris dans le contexte de connexion. De même que pour l'obtention de l'adresse IP à allouer au dispositif client, l'identifiant de l'équipement de gestion peut être obtenu par interrogation d'un serveur DHCP. Dans un autre mode de réalisation l'identifiant, un nom de domaine ou une adresse IP de l'équipement de gestion 50 par exemple, est configuré localement au niveau du serveur d'authentification 30. Il n'existe pas de limitation quant à l'obtention par le serveur d'authentification de cet identifiant. Lorsque l'identifiant est un nom de domaine de l'équipement de gestion 50, une étape d'interrogation d'un serveur DNS (pour *Domain Name System*) peut également optionnellement être mise en oeuvre afin d'obtenir une adresse IP de l'équipement de gestion 50.

Dans une étape G2, lorsque l'ensemble des paramètres du contexte de connexion ont été déterminés, le serveur d'authentification 30 envoie, par l'intermédiaire par exemple d'un équipement SGSN (pour *Serving GPRS Support Node*), le contexte au dispositif client 20. Le contexte de connexion est à titre d'exemple communiqué au dispositif client 20 par l'intermédiaire du protocole NAS (pour *Non-Access Stratum*).

Le serveur d'authentification 30 repasse ensuite à l'étape G0 en attente d'une nouvelle demande de contexte de connexion.

La **figure 2c** représente les étapes du procédé d'obtention, dans un réseau de communications 1, d'une politique de routage mise en oeuvre par un module logiciel 10 s'exécutant sur un dispositif client 20 selon un mode particulier de réalisation.

Lors d'une étape F0a, le module logiciel 10 interroge le système d'exploitation du dispositif client 20 afin d'obtenir l'identifiant de l'équipement de gestion de règles de routage 50.

Dans une étape F0b, le module logiciel 10 vérifie quel est le type d'identifiant obtenu pour l'équipement de gestion de règles de routage 50. L'identifiant obtenu est à titre d'exemple un URI (pour *Uniform Resource Identifier*) « https://proxy.myisp.fr/proxy.pac ».

Dans une étape F1a, le module logiciel extrait un nom de domaine à partir de l'URI obtenu à l'étape F0b. Le nom de domaine extrait est par exemple « proxy.mysip.fr ».

Le module logiciel 10 interroge ensuite lors d'une étape F1b, un serveur DNS à partir du nom de domaine « proxy.myisp.fr ». Cette interrogation correspond plus particulièrement à une requête de résolution DNS de type A sur le nom de domaine « proxy.mysip.fr » permettant d'obtenir un enregistrement DNS de type A tel que défini dans un document de l'IETF RFC 1035. Le module logiciel 10 obtient en réponse une adresse IP de l'équipement de gestion de règles de routage 50.

Dans une étape F2, le module logiciel 10 établie une connexion TCP (pour *Transmission Control Protocol*) avec l'équipement de gestion de règles de routage 50 au moyen de l'adresse IP de ce dernier.

Dans une étape F3, le module logiciel 10 obtient un certificat de l'équipement de gestion de règles 50. Pour cela le module logiciel 10 initialise l'établissement d'une connexion TLS (pour *Transport Layer Security*) par l'envoi à l'équipement de gestion 50 d'un message TLS ClientHello, puis reçoit en retour un message TLS ServerHello comprenant un certificat associé à l'équipement de gestion de règles 50.

Dans une étape F4, le module logiciel 10 analyse le certificat obtenu afin d'identifier un champ SAN (pour *Subject alt name*). Ce champ comprend notamment des identifiants de ressources tels que définis au chapitre 4.2.1.6 du document RFC 5280 de l'IETF. Ces identifiants sont par exemple une adresse IP, un nom de domaine, ou encore un URI. A titre d'exemple le champ SAN comprend les noms de domaine suivant : « proxy.isp.fr », « isp.sp.fr ». Le module logiciel 10 vérifie alors que le nom de domaine associé à l'équipement de gestion de règles de routage 50 est compris dans les noms de domaine du champ SAN. La présence du nom de domaine « proxy.isp.fr » parmi les noms de domaine du champ SAN permet notamment de garantir l'authenticité du certificat associé à l'équipement de gestion de règles de routage 50. Toujours lors de cette étape F4, le module logiciel 10 détermine une première règle de routage R0a des requêtes émises par ce dernier. Cette première règle de routage prend en compte les identifiants de ressources déclarées dans le certificat associé à l'équipement de gestion de règles de routage 50. Dans le mode de réalisation décrit, ces identifiants sont les noms de domaines « proxy.isp.fr », « isp.sp.fr ». Cette première règle de routage impose ainsi le routage de l'ensemble des requêtes émises par le module logiciel 10 relatives à l'un de ces noms de domaine vers l'équipement de gestion de règles de routage 50. Elle permet en particulier d'assurer à un utilisateur du dispositif client mobile 20 sur lequel s'exécute le module logiciel 10, un parcours sécurisé des requêtes émises par le module logiciel 10 à destination de l'un de ces noms de domaines. Cette règle de routage R0a garantie en outre que ces requêtes ne transiteront pas par un équipement mandataire non authentifié par le réseau de communications 1.

Dans une étape F5, le module logiciel 10 interroge l'équipement de gestion de règles de routage 50 afin d'obtenir une deuxième règle de routage R0b. A la différence de la première règle de routage R0a, la deuxième règle de routage comprend des sous-règles de filtrage et d'acheminement des requêtes émises par le module logiciel 10 vers des équipements mandataires non nécessairement authentifiés par le réseau de communications 1. La deuxième règle de routage R0b prend par exemple la forme d'un fichier de configuration connu de l'état de la technique appelé « proxy.pac » ou « wpad.dat ».

Le module logiciel 10 combine dans une étape F6 les première et deuxième règles de routage R0a et R0b. Il obtient alors une politique de routage précisant comment le module logiciel accède à des ressources identifiées par un URI. Plus précisément, le module logiciel 10 obtient la politique de routage à partir au moins de la première règle de routage vers un équipement mandataire certifié par l'opérateur du réseau de communications 1, au moyen de l'identifiant obtenu par le dispositif client 20 lors de son attachement au réseau de communications 1.

Enfin dans une étape F10 le module logiciel 10 vérifie si d'autres règles de routage peuvent être obtenues auprès d'équipements mandataires tiers. Selon les techniques connues de l'état de l'art, ces règles de routage sont par exemple obtenues par configuration d'une adresse IP d'un équipement mandataire au niveau du module logiciel 10, par configuration d'un URI indiquant un équipement mandataire auprès duquel un fichier « proxy.pac » peut être obtenu, ou encore par découverte d'un fichier « proxy.pac » par l'intermédiaire du protocole WPAD (pour *WEB Proxy Auto Discover*). Les étapes F0b à F6 sont alors réitérées pour d'une part authentifier l'équipement mandataire, et d'autre part obtenir une nouvelle politique de routage par combinaison de l'ensemble des règles de routage obtenues.

Dans un autre mode de réalisation, l'identifiant de l'équipement de gestion de règles de routage 50 obtenu par le module logiciel 10 à l'étape F0a est toujours du même type. L'étape F0b n'est alors pas mise en oeuvre.

Dans un autre mode réalisation où l'identifiant de l'équipement de gestion de règles de routage 50 est une adresse IP, les étapes F1a et F1b ne sont pas mises en oeuvre. Le module logiciel 10 établit directement une connexion TCP avec l'équipement de gestion de règles de routage 50. Aucune interrogation DNS n'est nécessaire pour l'obtention de la politique de routage à partir de la première règle de routage.

Dans un autre mode de réalisation où l'identifiant de l'équipement de gestion de règles de routage 50 est constitué par un certificat associé à l'équipement considéré, les étapes F1a à F3 ne sont pas mises en oeuvre. Le module logiciel 10 vérifie directement à l'étape F4, au moyen du champ SAN du certificat, si l'équipement de gestion de règles de routage 50 découvert lors de l'attachement du dispositif client 20 au réseau de communications 1 est authentifié par le réseau de communications 1. L'obtention de la politique de routage ne nécessite ainsi ni interrogation DNS, ni établissement d'une connexion TLS.

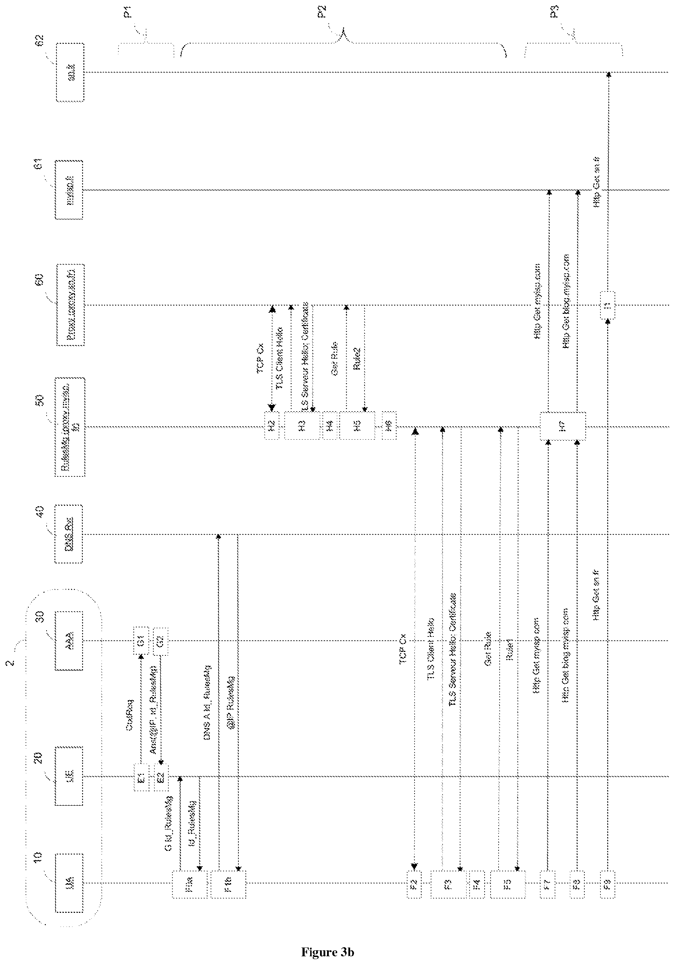

Dans un autre mode de réalisation, l'obtention de la deuxième règle de routage et la combinaison des première et deuxième règles de routage sont mises en oeuvre par l'équipement de gestion de règles de routage 50. Les étapes F2 à F6 sont alors mises en oeuvre par l'équipement de gestion de règles de routage 50. Ce mode de réalisation sera décrit ultérieurement en relation avec la figure 3b.

Dans un autre mode de réalisation, lorsqu'un conflit survient lors de la combinaison des règles de routage à l'étape F6, le module logiciel 10 envoie une information relative à ce conflit à l'équipement de gestion de règles de routage 50. Un tel conflit peut notamment intervenir lorsque des règles différentes s'appliquent à un même type de requêtes (e.g. requêtes relatives à un même nom de domaine) émises par le module logiciel 10. L'information relative au conflit est par exemple constituée de l'ensemble des règles pour lesquelles existe un conflit. Il peut également s'agir d'un identifiant d'un équipement mandataire sélectionné par le module logiciel 10 afin de résoudre le conflit. Lorsque la combinaison des règles de routage est mise en oeuvre par l'équipement de gestion de règles de routage 50, ce dernier peut alors prendre en compte cette information relative au conflit pour la construction d'une nouvelle politique de routage.

Enfin, dans un autre mode de réalisation où une politique de routage minimale est obtenue, l'étape F5 n'est pas mise en oeuvre. La politique de routage correspond alors simplement à la première règle de routage obtenue lors de l'étape F4.

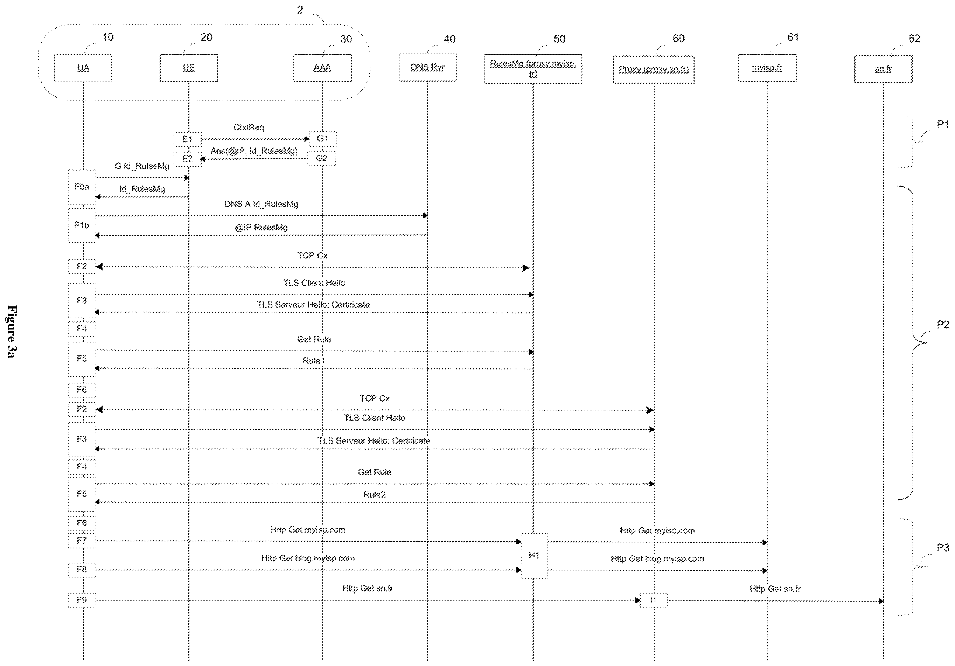

Les **figures 3a** **et** **3b** représentent des échanges entre équipements mettant en oeuvre les procédés d'obtention et d'aide à l'obtention d'une politique de routage, équipements du réseau de communications et équipements mandataires tiers selon deux modes particuliers de réalisation.

Trois phases P1, P2 et P3 sont notamment décrites. La phase P1 correspond à l'obtention d'un identifiant de l'équipement de gestion de règles de routage 50 lors d'un attachement du dispositif client 20 au réseau de communications 1. La phase P2 correspond à la construction et à l'obtention d'une politique de routage des requêtes émises par le module logiciel 10 à partir d'une première règle de routage obtenue au moyen de l'identifiant de l'équipement de gestion de règles de routage 50. La phase P3 correspond à la mise en oeuvre de la politique de routage par le module logiciel 10.

La figure 3a décrit plus particulièrement un mode de réalisation dans lequel l'obtention de la deuxième règle de routage et la combinaison des premières et deuxièmes règles de routage sont mises en oeuvre par le module logiciel 10.

Lors de la phase P1, le dispositif client 20 envoie lors d'une étape E1 une demande de contexte de connexion au serveur d'authentification 30. En réponse le serveur d'authentification 30 lui renvoie un contexte de connexion comprenant une adresse IP à allouer au dispositif client 20 ainsi qu'un identifiant de l'équipement de gestion de règles de routage 50. Cet identifiant est à titre d'exemple l'URI « https:\\proxy.myisp.fr », et est reçu lors d'une étape E2.

La phase P2 débute ensuite avec l'obtention lors d'une étape F0a, par le module logiciel 10 de l'URI « https:\\proxy.mysip.fr » par l'intermédiaire du système d'exploitation du dispositif client 20.

A partir de cet URI, le module logiciel 10 envoie lors d'une étape F1b, une requête DNS A à un serveur DNS 40, et obtient une adresse IP de l'équipement de gestion de règles de routage 50.

Le module logiciel 10 établie lors d'une étape F2 une connexion TCP avec l'équipement de gestion de règles de routage 50.

Puis il établie également lors d'une étape F3 une connexion TLS au cours de laquelle il récupère un certificat associé à l'équipement de gestion de règles de routage 50. A titre d'exemple ce certificat contient un champ SAN se présentant sous la forme suivante :
"subjectaltname": "DNS:*.myisp.fr, DNS:*.cdn.fr"

Dans une étape F4, le module logiciel détermine une première règle de routage R0a minimale à partir du champ SAN. La première règle minimale consiste dans l'exemple considéré à router toutes les requêtes relatives aux noms de domaine « myisp.fr » et « cdn.fr » vers l'équipement de gestion de règles de routage 50 authentifié et découvert par le dispositif client 20 lors de l'attachement du dispositif client au réseau de communications 1.

Dans une étape F5, le module logiciel obtient une deuxième règle de routage R0b auprès de l'équipement de gestion de règles de routage 50 au moyen de l'URI obtenu par le dispositif client à l'étape E2. Cette deuxième règle de routage R0b est définie par les sous-règles contenues dans le fichier « proxy.pac » indiqué par l'URI « https:\\proxy.myisp.fr\proxy.pac ». Cette deuxième règle de routage R0b contient à titre d'exemple une sous-règle indiquant de router toutes les requêtes du module logiciel 10 relatives au nom de domaine « vod.fr » vers un équipement mandataire associé au nom de domaine « proxy.vod.fr »

Puis lors d'une étape F6, le module logiciel combine les première et deuxième règles de routage en une seule politique de routage vers plusieurs équipements mandataire certifiés.

Dans le cas où des règles de routages proposées par des équipements mandataires tiers peuvent être découvertes par le module logiciel 10 par l'intermédiaire d'URIs identifiant des fichiers de configuration « proxy.pac », les étapes F2 à F6 sont réitérées pour chacun de ces URIs. A titre d'exemple ces étapes sont réitérées afin de vérifier l'authenticité du certificat associé à l'équipement mandataire tiers 60 et obtenir la règle de routage mémorisée par ce dernier. Cette dernière règle de routage consiste par exemple à router toutes les requêtes relatives au nom de domaine « sn.fr » par l'équipement mandataire 60 associé à ce nom de domaine. Une nouvelle politique de routage est alors construite à l'étape F6 par combinaison des règles de routage de la précédente politique de routage avec la règle de routage nouvellement obtenue. Lorsqu'aucune autre règle de routage d'un équipement mandataire tiers n'est à récupérer, la politique de routage est complète et la phase P2 prend fin. A la fin de la phase P2, la politique de routage obtenue pour l'exemple considéré consiste donc à router l'ensemble des requêtes relatives aux noms de domaine « myisp.fr » et « cdn.fr » vers l'équipement de gestion de règles de routage 50, l'ensemble des requêtes relatives au nom de domaine « vod.fr » vers un équipement mandataire associé au nom de domaine « vod.fr », et l'ensemble des requêtes relatives au nom de domaine « sn.fr » vers un équipement mandataire 60 de nom de domaine « proxy.sn.fr ».

Enfin lors de la phase P3, la politique de routage obtenue est mise en oeuvre par le module logiciel 10. A titre d'exemple trois requêtes « Http Get myisp.com », « Http Get blog.myisp.com » et « Http Get sn.fr » sont émises par le module logiciel 10 respectivement lors des étapes F7, F8 et F9. Grâce à la politique de routage, les requêtes « Http Get myisp.com » et « Http Get blog.myisp.com » sont routées vers l'équipement de gestion de règles de routage 50. La requête Gttp Get sn.fr » est quant à elle routée vers l'équipement mandataire 60.

Dans un autre mode de réalisation en relation avec la figure 3b, l'obtention de la deuxième règle de routage et la combinaison des première et deuxièmes règles de routage sont mises en oeuvre par l'équipement de gestion de règles de routage 50. Les phases P1 et P3 restent identiques au mode de réalisation décrit en relation avec la figure 3a.

L'obtention et la combinaison lors des étapes F2 à F6 des règles de routages telles que décrites en relation avec la figure 3a sont alors obtenues lors des étapes correspondantes H2 à H6 mises en oeuvre par l'équipement de gestion de règles de routage 50.

Le module logiciel 10 établit une connexion TCP lors de l'étape F2, puis une connexion TLS lors de l'étape F3 au cours de laquelle il obtient un certificat associé à l'équipement de gestion de règles de routage 50. Le module logiciel 10 vérifie ensuite lors de l'étape F4 l'authenticité du certificat associé à l'équipement de gestion de règles de routage 50. Le module logiciel obtient finalement la politique de routage lors de l'étape F5.

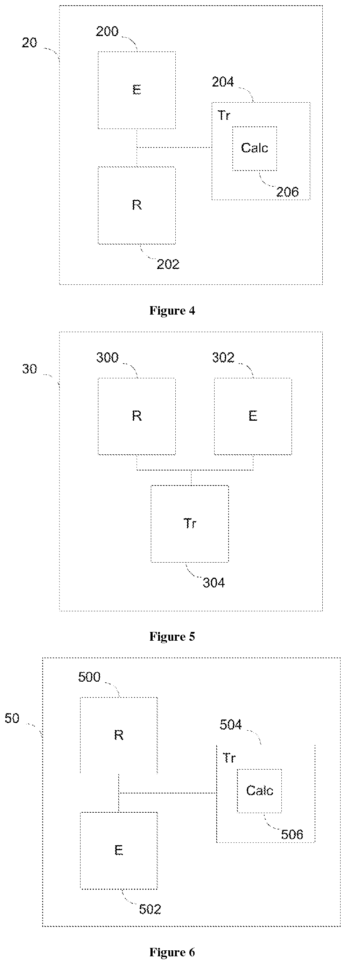

Un dispositif client 20 agencé pour mettre en oeuvre des étapes du procédé d'obtention d'une politique de routage selon un mode particulier de réalisation va maintenant être décrit en relation avec la **figure 4****.** Un tel dispositif client 20 est notamment agencé pour obtenir un identifiant d'un équipement de gestion de règles de routage 50. Le dispositif client 20 comprend notamment :
- un module d'envoi 200 agencé pour envoyer à un serveur d'authentification 30 une demande de contexte de connexion afin d'attacher le dispositif client 20 à un réseau de communications 1 ;
- un module de réception 202 d'une réponse de contexte de connexion, le contexte comprenant un identifiant d'un équipement de gestion de règles de routage 50 ;
- un module de traitement 204 agencé pour obtenir une politique de routage destinée à être utilisée par le dispositif client 20, au moyen de l'identifiant de l'équipement 50 ;

Dans un mode de réalisation particulier, le module de traitement 204 construit la politique de routage à partir de plusieurs règles de routage qu'il a obtenues de différentes sources, auquel cas il comprend en outre un module de calcul 206 agencé pour combiner les règles de routage ainsi obtenues afin de construire la politique de routage.

La **figure 5** représente un serveur d'authentification 30 agencé pour aider un dispositif client 20 à obtenir une politique de routage. Le serveur d'authentification 30 comprend :
- un module de réception 300 agencé pour recevoir une demande de contexte de connexion afin d'attacher le dispositif client 20 au réseau de communications 1 ;
- un module d'envoi 302 agencé pour envoyer une réponse de contexte de connexion, le contexte comprenant un identifiant d'un équipement de gestion de règles de routage 50 ;
- un module de traitement 304 configuré pour insérer l'identifiant de l'équipement 50 dans une réponse de contexte de connexion destinée à un dispositif client 20, suite à la réception d'une demande de contexte de connexion de ce dispositif client.

La **figure 6** représente un équipement de gestion de règles de routage 50 selon un mode particulier de réalisation. L'équipement de gestion de règles de routage 50 est agencé pour gérer des règles de routage. Il comprend notamment :
- un module de réception 500 agencé pour recevoir une demande de politique de routage de requêtes émises par un module logiciel 10 s'exécutant sur un dispositif client 20 ;
- un module d'envoi 502 agencé pour envoyer la politique de routage ;
- un module de traitement 504 agencé pour générer une politique de routage destinée à être utilisée par un dispositif client.

Dans un mode de réalisation particulier, le module de traitement 504 construit la politique de routage à partir de plusieurs règles de routage qu'il a obtenues de différentes sources, auquel cas il comprend en outre un module de calcul 506 agencé pour combiner les règles de routage ainsi obtenues afin de construire la politique de routage et une mémoire agencée pour mémoriser les règles de routage obtenues et la politique de routage.

L'invention est mise en oeuvre au moyen de composants logiciels et/ou matériels. Dans cette optique, le terme "module" peut correspondre dans ce document aussi bien à un composant logiciel, qu'à un composant matériel ou à un ensemble de composants matériels et/ou logiciels, apte à mettre en oeuvre une fonction ou un ensemble de fonctions, selon ce qui est décrit précédemment pour le module concerné.

Un composant logiciel correspond à un ou plusieurs programmes d'ordinateur, un ou plusieurs sous-programmes d'un programme, ou de manière plus générale à tout élément d'un programme ou d'un logiciel. Un tel composant logiciel est stocké en mémoire puis chargé et exécuté par un processeur de données d'une entité physique et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware). Il peut s'agir d'un composant matériel programmable ou non, avec ou sans processeur intégré pour l'exécution de logiciel. Il s'agit par exemple d'un circuit intégré, d'une carte à puce, d'une carte électronique pour l'exécution d'un micrologiciel (firmware), etc.

Dans un mode de réalisation particulier, les modules 200, 202, 204, 206, 300, 302, 304, 500, 502, 504, et 506 sont agencés pour mettre en oeuvre le procédé d'obtention précédemment décrit. Il s'agit de préférence de modules logiciels comprenant des instructions logicielles pour faire exécuter celles des étapes du procédé d'obtention précédemment décrit, mises en oeuvre par un module logiciel, un dispositif client sur lequel le module logiciel s'exécute et un équipement de gestion de règles de routage. L'invention concerne donc aussi :
- un module logiciel, comprenant des instructions de code de programme destinées à commander l'exécution des étapes du procédé d'obtention précédemment décrit, lorsque ledit module logiciel est exécuté par un dispositif client ;
- un programme pour un serveur d'authentification, comprenant des instructions de code de programme destinées à commander l'exécution des étapes du procédé d'aide à l'obtention d'une politique de routage précédemment décrit, lorsque ledit programme est exécuté par ledit serveur ;
- un programme pour un équipement de gestion de règles de routage, comprenant des instructions de code de programme destinées à commander l'exécution des étapes du procédé d'obtention d'une politique de routage précédemment décrit, lorsque ledit programme est exécuté par ledit équipement ;
- un support d'enregistrement lisible par un dispositif client sur lequel est enregistré le module logiciel pour un tel dispositif client ;
- un support d'enregistrement lisible par un serveur d'authentification sur lequel est enregistré le programme pour un tel serveur ;
- un support d'enregistrement lisible par un équipement de gestion de règles de routage sur lequel est enregistré le programme pour un tel équipement.

Les modules logiciels peuvent être stockés dans ou transmis par un support de données. Celui-ci peut être un support matériel de stockage, par exemple un CD-ROM, une disquette magnétique ou un disque dur, ou bien un support de transmission tel qu'un signal électrique, optique ou radio, ou un réseau de télécommunication.

## Revendications

1. Procédé d'obtention, dans un réseau de communications (1), d'une politique de routage indiquant des règles de routage de requêtes émises par un module logiciel (10) s'exécutant sur un dispositif client (20), le procédé étant mis en oeuvre lors d'un attachement du dispositif client au réseau de communications, et comprenant l'envoi par le dispositif client, à un serveur d'authentification (30) du réseau de communications, d'une demande de contexte de connexion afin d'attacher le dispositif client au réseau de communications, le procédé étant **caractérisé en ce qu'**il comprend en outre les étapes suivantes:
- réception (E2), par le dispositif client, depuis le serveur d'authentification, d'une réponse de contexte de connexion, ledit contexte comprenant un identifiant d'un équipement de gestion de règles de routage (50) ;
- obtention (F6), par le module logiciel, de la politique de routage, à partir au moins d'une première règle de routage vers un équipement mandataire certifié par l'opérateur du réseau de communications obtenue au moyen de l'identifiant.

2. Procédé d'obtention selon la revendication 1, comprenant en outre les étapes suivantes mises en oeuvre par le module logiciel, préalablement à l'obtention de ladite politique de routage :
- établissement d'une connexion sécurisée (F3) avec l'équipement de gestion de règles de routage;
- réception (F3), par l'intermédiaire de la connexion sécurisée, d'au moins un certificat associé à l'équipement de gestion de règles de routage ;
et dans lequel ladite première règle de routage est déterminée (F4) à partir d'au moins un identifiant de ressource compris dans le certificat reçu.

3. Procédé d'obtention selon l'une des revendications 1 à 2, comprenant l'obtention (F5), d'une deuxième règle de routage vers un équipement mandataire tiers (60, 61, 62, 63), la politique de routage étant obtenue en combinant les première et deuxième règles de routage.

4. Procédé d'obtention selon la revendication 3, dans lequel l'obtention de la deuxième règle de routage et la combinaison des première et deuxième règles de routage sont mises en oeuvre par le module logiciel s'exécutant sur le dispositif client.

5. Procédé d'obtention selon la revendication 4, comprenant en outre lorsque les première et deuxième règles de routage sont en conflit, une étape d'envoi à l'équipement de gestion de règles de routage, d'une information relative audit conflit.

6. Procédé d'obtention selon la revendication 3, dans lequel l'obtention de la deuxième règle de routage et la combinaison des première et deuxième règles de routage sont mises en oeuvre par l'équipement de gestion de règles de routage.

7. Procédé, dans un réseau de communications, d'aide à l'obtention d'une politique de routage indiquant des règles de routage de requêtes émises par un module logiciel s'exécutant sur un dispositif client, ledit procédé étant **caractérisé en ce qu'**il comprend les étapes suivantes, mises en oeuvre lors d'un attachement du dispositif client audit réseau de communications :
- réception (G1), par un serveur d'authentification, depuis le dispositif client, d'une demande de contexte de connexion afin d'attacher le dispositif client au réseau de communications;
- envoi (G2), par un serveur d'authentification, au dispositif client, d'une réponse de contexte de connexion, ledit contexte comprenant un identifiant d'un équipement de gestion de règles de routage.

8. Dispositif client (20) agencé pour obtenir un identifiant d'un équipement de gestion de règles de routage (50), ledit dispositif client comprenant un module d'envoi (200) agencé pour envoyer à un serveur d'authentification une demande de contexte de connexion afin d'attacher le dispositif client à un réseau de communications, le dispositif étant **caractérisé en ce qu'**il comprend en outre:
- un module de réception (202) d'une réponse de contexte de connexion, ledit contexte comprenant un identifiant d'un équipement de gestion de règles de routage ;
- un module de traitement (204) agencé pour obtenir une politique de routage destinée à être utilisée par le dispositif client, au moyen de l'identifiant de l'équipement de gestion de règles de routage.

9. Serveur d'authentification (30), dans un réseau de communications, agencé pour aider un dispositif client à obtenir une politique de routage, comprenant un module de réception (300) agencé pour recevoir une demande de contexte de connexion afin d'attacher le dispositif client au réseau de communications, le serveur étant **caractérisé en ce qu'**il comprend en outre:
- un module d'envoi (302) agencé pour envoyer une réponse de contexte de connexion, ledit contexte comprenant un identifiant d'un équipement de gestion de règles de routage ;
- un module de traitement (304) configuré pour insérer l'identifiant de l'équipement dans une réponse de contexte de connexion destinée à un dispositif client, suite à la réception d'une demande de contexte de connexion de ce dispositif client.

10. Système d'obtention (2) d'une politique de routage indiquant des règles de routage de requêtes émises par un module logiciel s'exécutant sur un dispositif client, agencé pour fournir ladite politique de routage au module logiciel, comprenant :
- le dispositif client selon la revendication 8 ;
- un serveur d'authentification selon la revendication 9.

11. Système selon la revendication 10, comprenant en outre un équipement de gestion de règles de routage (50) agencé pour gérer des règles de routage, comprenant :
- un module de réception (500) agencé pour recevoir une demande de politique de routage de requêtes émises par un module logiciel s'exécutant sur un dispositif client ;
- un module d'envoi (502) agencé pour envoyer la politique de routage ;
- un module de traitement (504) agencé pour générer une politique de routage destinée à être utilisée par un dispositif client.

12. Module logiciel pour un dispositif client comprenant des instructions de code de programme destinées à commander l'exécution de toutes les étapes du procédé selon l'une des revendications 1 à 6, lorsque ledit module logiciel est exécuté par ledit dispositif client.

13. Programme pour un serveur d'authentification, comprenant des instructions de code de programme destinées à commander l'exécution de toutes les étapes du procédé selon la revendication 7, lorsque ledit programme est exécuté par ledit serveur d'authentification.

14. Support d'enregistrement lisible par un dispositif client sur lequel est enregistré le module logiciel selon la revendication 12.

## Patentansprüche

1. Verfahren zur Erzeugung, in einem Kommunikationsnetz (1), einer Routing-Richtlinie, die Regeln für das Routing von Anfragen angibt, die von einem Software-Modul (10) gesendet werden, das auf einer Client-Vorrichtung (20) ausgeführt wird, wobei das Verfahren bei einem Anschluss der Client-Vorrichtung an das Kommunikationsnetz durchgeführt wird und das Senden, durch die Client-Vorrichtung an einen Authentifizierungsserver (30) des Kommunikationsnetzes, einer Verbindungskontextanforderung, um die Client-Vorrichtung an das Kommunikationsnetz anzuschließen, umfasst, wobei das Verfahren **dadurch gekennzeichnet ist, dass** es außerdem die folgenden Schritte umfasst:
- Empfang (E2), durch die Client-Vorrichtung von dem Authentifizierungsserver, einer Verbindungskontextantwort, wobei der Kontext eine Kennung einer Einrichtung zur Verwaltung von Routing-Regeln (50) umfasst;
- Erzeugung (F6), durch das Software-Modul, der Routing-Richtlinie ausgehend von wenigstens einer ersten Routing-Regel zu einem durch den Betreiber des Kommunikationsnetzes zertifizierten Proxy, die mittels der Kennung gewonnen wird.

2. Verfahren zur Erzeugung nach Anspruch 1, welches außerdem die folgenden Schritte umfasst, die von dem Software-Modul vor der Erzeugung der Routing-Richtlinie durchgeführt werden:
- Aufbau einer sicheren Verbindung (F3) mit der Einrichtung zur Verwaltung von Routing-Regeln;
- Empfang (F3), über die sichere Verbindung, wenigstens eines Zertifikats, das der Einrichtung zur Verwaltung von Routing-Regeln zugeordnet ist;
und wobei die erste Routing-Regel aus wenigstens einer Ressourcenkennung, die in dem empfangenen Zertifikat enthalten ist, bestimmt wird (F4).

3. Verfahren zur Erzeugung nach einem der Ansprüche 1 bis 2, welches die Gewinnung (F5) einer zweiten Routing-Regel zu einem Drittanbieter-Proxy (60, 61, 62, 63) umfasst, wobei die Routing-Richtlinie erzeugt wird, indem die erste und die zweite Routing-Regel kombiniert werden.

4. Verfahren zur Erzeugung nach Anspruch 3, wobei die Gewinnung der zweiten Routing-Regel und die Kombination der ersten und der zweiten Routing-Regel von dem Software-Modul durchgeführt werden, das auf der Client-Vorrichtung ausgeführt wird.

5. Verfahren zur Erzeugung nach Anspruch 4, welches außerdem, wenn ein Konflikt zwischen der ersten und der zweiten Routing-Regel vorliegt, einen Schritt des Sendens einer Information in Bezug auf diesen Konflikt an die Einrichtung zur Verwaltung von Routing-Regeln umfasst.

6. Verfahren zur Erzeugung nach Anspruch 3, wobei die Gewinnung der zweiten Routing-Regel und die Kombination der ersten und der zweiten Routing-Regel von der Einrichtung zur Verwaltung von Routing-Regeln durchgeführt werden.

7. Verfahren, in einem Kommunikationsnetz, zur Unterstützung der Erzeugung einer Routing-Richtlinie, die Regeln für das Routing von Anfragen angibt, die von einem Software-Modul gesendet werden, das auf einer Client-Vorrichtung ausgeführt wird, wobei das Verfahren **dadurch gekennzeichnet ist, dass** es die folgenden Schritte umfasst, die bei einem Anschluss der Client-Vorrichtung an das Kommunikationsnetz durchgeführt werden:
- Empfang (G1), durch einen Authentifizierungsserver von der Client-Vorrichtung, einer Verbindungskontextanforderung, um die Client-Vorrichtung an das Kommunikationsnetz anzuschließen;
- Senden (G2), durch einen Authentifizierungsserver an die Client-Vorrichtung, einer Verbindungskontextantwort, wobei der Kontext eine Kennung einer Einrichtung zur Verwaltung von Routing-Regeln umfasst.

8. Client-Vorrichtung (20), welche dafür ausgelegt ist, eine Kennung einer Einrichtung zur Verwaltung von Routing-Regeln (50) zu gewinnen, wobei die Client-Vorrichtung ein Sendemodul (200) umfasst, das dafür ausgelegt ist, an einen Authentifizierungsserver eine Verbindungskontextanforderung, um die Client-Vorrichtung an ein Kommunikationsnetz anzuschließen, zu senden, wobei die Vorrichtung **dadurch gekennzeichnet ist, dass** sie außerdem umfasst:
- ein Empfangsmodul (202) für eine Verbindungskontextantwort, wobei der Kontext eine Kennung einer Einrichtung zur Verwaltung von Routing-Regeln umfasst;
- ein Verarbeitungsmodul (204), das dafür ausgelegt ist, mittels der Kennung der Einrichtung zur Verwaltung von Routing-Regeln eine Routing-Richtlinie zu erzeugen, die dazu bestimmt ist, von der Client-Vorrichtung verwendet zu werden.

9. Authentifizierungsserver (30) in einem Kommunikationsnetz, welcher dafür ausgelegt ist, eine Client-Vorrichtung bei der Erzeugung einer Routing-Richtlinie zu unterstützen, und ein Empfangsmodul (300) umfasst, das dafür ausgelegt ist, eine Verbindungskontextanforderung, um die Client-Vorrichtung an das Kommunikationsnetz anzuschließen, zu empfangen, wobei der Server **dadurch gekennzeichnet ist, dass** er außerdem umfasst:
- ein Sendemodul (302), das dafür ausgelegt ist, eine Verbindungskontextantwort zu senden, wobei der Kontext eine Kennung einer Einrichtung zur Verwaltung von Routing-Regeln umfasst;
- ein Verarbeitungsmodul (304), das dafür ausgebildet ist, die Kennung der Einrichtung in eine Verbindungskontextantwort einzufügen, die für eine Client-Vorrichtung bestimmt ist, im Anschluss an den Empfang einer Verbindungskontextanforderung von dieser Client-Vorrichtung.

10. System zur Erzeugung (2) einer Routing-Richtlinie, die Regeln für das Routing von Anfragen angibt, die von einem Software-Modul gesendet werden, das auf einer Client-Vorrichtung ausgeführt wird, welches dafür ausgelegt ist, die Routing-Richtlinie an das Software-Modul zu liefern, umfassend:
- die Client-Vorrichtung nach Anspruch 8;
- einen Authentifizierungsserver nach Anspruch 9.

11. System nach Anspruch 10, welches außerdem eine Einrichtung zur Verwaltung von Routing-Regeln (50) umfasst, die dafür ausgelegt ist, Routing-Regeln zu verwalten, und umfasst:
- ein Empfangsmodul (500), das dafür ausgelegt ist, eine Anforderung einer Routing-Richtlinie für Anforderungen zu empfangen, die von einem Software-Modul gesendet werden, das auf einer Client-Vorrichtung ausgeführt wird;
- ein Sendemodul (502), das dafür ausgelegt ist, die Routing-Richtlinie zu senden;
- ein Verarbeitungsmodul (504), das dafür ausgelegt ist, eine Routing-Richtlinie zu erzeugen, die dazu bestimmt ist, von einer Client-Vorrichtung verwendet zu werden.

12. Software-Modul für eine Client-Vorrichtung, welches Programmcodeanweisungen umfasst, die dazu bestimmt sind, die Ausführung aller Schritte des Verfahrens nach einem der Ansprüche 1 bis 6 zu bewirken, wenn das Software-Modul von der Client-Vorrichtung ausgeführt wird.

13. Programm für einen Authentifizierungsserver, welches Programmcodeanweisungen umfasst, die dazu bestimmt sind, die Ausführung aller Schritte des Verfahrens nach Anspruch 7 zu bewirken, wenn das Programm von dem Authentifizierungsserver ausgeführt wird.

14. Aufzeichnungsmedium, das von einer Client-Vorrichtung lesbar ist und auf dem das Software-Modul nach Anspruch 12 aufgezeichnet ist.

## Claims

1. Method for obtaining, in a communication network (1), a routing policy indicating rules for routing requests transmitted by a software module (10) running on a client device (20), the method being implemented when the client device is attached to the communication network, and comprising the client device sending, to an authentication server (30) of the communication network, a connection context request in order to attach the client device to the communication network, the method being **characterized in that** it moreover comprises the following steps:
- the client device receiving (E2), from the authentication server, a connection context response, said context comprising an identifier of a routing rule management apparatus (50);
- the software module obtaining (F6) the routing policy, from at least one first rule for routing to a proxy apparatus certified by the operator of the communication network, said rule being obtained by means of the identifier.

2. Obtainment method according to Claim 1, moreover comprising the following steps implemented by the software module, prior to the obtainment of said routing policy:
- setting up a secure connection (F3) to the routing rule management apparatus;
- using the secure connection to receive (F3) at least one certificate associated with the routing rule management apparatus;
and in which said first routing rule is determined (F4) from at least one resource identifier included in the received certificate.

3. Obtainment method according to either of Claims 1 and 2, comprising obtaining (F5) a second rule for routing to a third-party proxy apparatus (60, 61, 62, 63), the routing policy being obtained by combining the first and second routing rules.

4. Obtainment method according to Claim 3, in which the obtainment of the second routing rule and the combination of the first and second routing rules are implemented by the software module running on the client device.

5. Obtainment method according to Claim 4, moreover comprising, when the first and second routing rules are in conflict, a step of sending a piece of information relating to said conflict to the routing rule management apparatus.

6. Obtainment method according to Claim 3, in which the obtainment of the second routing rule and the combination of the first and second routing rules are implemented by the routing rule management apparatus.

7. Method, in a communication network, for assisting in obtaining a routing policy indicating rules for routing requests transmitted by a software module running on a client device, said method being **characterized in that** it comprises the following steps, implemented when the client device attaches to said communication network:
- an authentication server receiving (G1), from the client device, a connection context request in order to attach the client device to the communication network;
- an authentication server sending (G2), to the client device, a connection context response, said context comprising an identifier of a routing rule management apparatus.

8. Client device (20) designed to obtain an identifier of a routing rule management apparatus (50), said client device comprising a sending module (200) designed to send a connection context request to an authentication server in order to attach the client device to a communication network, the device being **characterized in that** it moreover comprises:
- a module (202) for receiving a connection context response, said context comprising an identifier of a routing rule management apparatus;
- a processing module (204) designed to obtain a routing policy intended to be used by the client device, by means of the identifier of the routing rule management apparatus.

9. Authentication server (30), in a communication network, designed to assist a client device in obtaining a routing policy, comprising a receiving module (300) designed to receive a connection context request in order to attach the client device to the communication network, the server being **characterized in that** it moreover comprises:
- a sending module (302) designed to send a connection context response, said context comprising an identifier of a routing rule management apparatus;
- a processing module (304) configured to insert the identifier of the apparatus into a connection context response intended for a client device, following reception of a connection context request from this client device.

10. Obtainment system (2) for a routing policy indicating rules for routing requests transmitted by a software module running on a client device, designed to provide said routing policy for the software module, comprising:
- the client device according to Claim 8;
- an authentication server according to Claim 9.

11. System according to Claim 10, moreover comprising a routing rule management apparatus (50) designed to manage routing rules, comprising:
- a receiving module (500) designed to receive a request for a policy for routing requests transmitted by a software module running on a client device;
- a sending module (502) designed to send the routing policy;
- a processing module (504) designed to generate a routing policy intended to be used by a client device.

12. Software module for a client device comprising program code instructions intended to control the execution of all the steps of the method according to one of Claims 1 to 6 when said software module is executed by said client device.

13. Program for an authentication server, comprising program code instructions intended to control the execution of all the steps of the method according to Claim 7 when said program is executed by said authentication server.

14. Recording medium readable by a client device on which is recorded the software module according to Claim 12.
